# EUROPÄISCHE PATENTSCHRIFT

(11) **EP 3 106 326 B1**
(45) Veröffentlichungstag und Bekanntmachung des Hinweises auf die Patenterteilung: **27.09.2017**
(21) Anmeldenummer: 16171433.2
(22) Anmeldetag: 25.05.2016
(51) Int. Cl.: B60C 27/04, B60C 27/08

(54) **REIFEN- ODER GLEITSCHUTZVORRICHTUNG FÜR KRAFTFAHRZEUGREIFEN MIT EINEM C-FÖRMIGEN EINHÄNGEGLIED**
TIRE OR ANTI-SKID MEANS FOR MOTOR VEHICLE TYRES WITH A C-SHAPED ATTACHMENT BODY
DISPOSITIF ANTIDERAPANT OU DE PROTECTION DE PNEU POUR DES PNEUS DE VEHICULE AUTOMOBILE COMPRENANT UN ELEMENT D'ACCROCHAGE EN C

(30) Priorität: 19.06.2015 DE 102015211389
(43) Veröffentlichungstag der Anmeldung: 21.12.2016
(73) Patentinhaber: RUD Ketten Rieger & Dietz GmbH u. Co. KG, 73432 Aalen (DE)
(72) Erfinder: Schmidle, Reinhold, 73432 Aalen (DE); Sieber, Frank, 73432 Aalen (DE)
(74) Vertreter: Grünecker Patent- und Rechtsanwälte PartG mbB

(56) Entgegenhaltungen:
- WO-A1-2005/100055
- WO-A1-2006/106442
- DE-A1-102011 002 178
- US-A1- 2011 220 262

## Beschreibung

Die Erfindung betrifft eine Reifen- oder Gleitschutzvorrichtung für Kraftfahrzeugreifen, mit wenigstens einem Stegkörper, der zwei gegenüberliegende Seiten aufweist, von denen sich zwei Kettenstränge weg erstrecken, die durch ein Einhängeglied miteinander verbunden sind. Derartige Vorrichtungen sind beispielsweise aus der DE 10 2011 002 178 A1, der US2011/0220262 und der WO2005/100055 bekannt. Die Stegkörper liegen bei der Reifenkette der Patentveröffentlichung DE 10 2011 002 178 A1 hochkant auf der Reifenfläche auf und dienen sowohl als Traktionselemente als auch als Breithalter für das Laufnetz der Kette. Unter dem Laufnetz sind dabei diejenigen Teile der Reifenkette zu verstehen, die im auf dem Kraftfahrzeugreifen montierten Zustand auf der Lauffläche aufliegen und beim Abrollen des Kraftfahrzeugreifens zwischen Lauffläche und Untergrund zu liegen kommen. An den Stegkörpern sind Leiterkettenstränge eingehängt, welche das Laufnetz mit Seitensträngen verbinden. Die Leiterkettenstränge verlaufen im Wesentlichen radial entlang der Reifenflanke des Kraftfahrzeugreifens. Die Seitenstränge verhindern, dass sich die Reifenkette in axialer Richtung vom Reifen abschälen kann.

Reifen- oder Gleitschutzvorrichtungen sind jeweils nur für eine stark begrenzte Anzahl von unterschiedlichen, im Übrigen standardisierten Reifengrößen verwendbar. Aufgrund der großen Anzahl der unterschiedlichen Reifengrößen müssen die Hersteller eine Vielzahl von unterschiedlichen Größen der Reifen- oder Gleitschutzvorrichtungen derselben Bauart vorhalten. Bei der Reifenkette der DE 10 2011 002 178 A1 ist die Fertigung unterschiedlicher Größen recht aufwändig, weil die beiden sich vom Stegkörper weg erstreckenden Kettenstränge, deren Länge von der Größe der Reifenkette abhängt, recht aufwändig miteinander verbunden werden müssen.

Folglich liegt der Erfindung die Aufgabe zugrunde, die Reifenkette der DE 10 2011 002 178 A1 so zu modifizieren, dass eine große Anzahl unterschiedlicher Größen mit geringerem Fertigungsaufwand hergestellt werden kann.

Diese Aufgabe wird erfindungsgemäß für die eingangs genannte Reifen- oder Gleitschutzvorrichtung dadurch gelöst, dass das Einhängeglied C-förmig mit einer Einführöffnung zum Einhängen jeweils eines Kettengliedes der zwei Kettenstränge ausgestaltet ist und dass das Einhängeglied den Stegkörper durchragend in einer Durchstecköffnung des Stegkörpers angeordnet ist.

Durch diese einfache Maßnahme kann der Fertigungsaufwand erheblich verringert werden. Zum einen erlaubt das C-förmige Einhängeglied ein einfacheres Einhängen der beiden Kettenstränge als beim Stand der Technik. Zum anderen können die beiden Kettenstränge zu beiden Seiten des Stegkörpers nunmehr einfacher bemessen werden, da sie jeweils exakt am Stegkörper enden. Bei der Reifenkette der DE 10 2011 002 178 A1 war dagegen das Einhängeglied jenseits des Stegkörpers angeordnet, so dass bei der Fertigung berücksichtigt werden musste, dass der eine Kettenstrang länger zu dimensionieren ist als der andere Kettenstrang. Schließlich schützt der Stegkörper das sich in der Durchstecköffnung befindliche Einhängeglied, während das Einhängeglied der DE 10 2011 002 178 A1 auf der Lauffläche auflag und somit stärker abnutzen konnte.

Die erfindungsgemäße Lösung kann durch die folgenden voneinander unabhängigen, jeweils für sich vorteilhaften und beliebig miteinander kombinierbaren Weiterbildungen verbessert werden.

So kann in einer ersten vorteilhaften Ausgestaltung das Einhängeglied mit einem Spiel im Stegkörper bzw. längsverschieblich aufgenommen sein, das so bemessen ist, dass bei einem auf einer Seite des Stegkörpers in das Einhängeglied eingehängten Kettenstrang die Einführöffnung zum Einhängen des anderen der zwei Kettenstränge auf die andere Seite des Stegkörpers verschieblich ist. Diese Ausgestaltung erlaubt es, die beiden Kettenstränge nacheinander bei in der Durchstecköffnung verbleibendem Einhängeglied einzuhängen.

Der Stegkörper und/oder das Einhängeglied kann ein gestanztes Teil sein. Der Stegkörper und/oder das Einhängeglied kann aus einem Flachmaterial, beispielsweise einem Blech gestanzt sein. Die Durchstecköffnung kann als ein Langloch ausgebildet sein, das ebenfalls in den Stegkörper eingestanzt ist. In Anbetracht der beim Abrollen des Kraftfahrzeugreifens auftretenden Kräfte sollte das Flachmaterial nicht zu dünn gewählt werden. Materialdicken zwischen 3 mm und 8 mm dürften ausreichende Festigkeit aufweisen. Die Höhe des Stegkörpers kann zwischen 10 mm und 30 mm betragen. Die Seiten, von denen sich die beiden Kettenstränge vom Stegkörper weg erstrecken, können insbesondere Flachseiten des Stegkörpers sein. Der Stegkörper kann im montierten Zustand der Reifen- oder Gleitschutzvorrichtung auf einer seiner Schmalseiten, also hochkant, stehen.

Die lichte Weite der Einführöffnung kann größer sein als die Materialstärke bzw. die Breite des Stegkörpers zumindest in einem sich an die Durchstecköffnung unmittelbar anschließenden Bereich des Stegkörpers. Das Einhängeglied kann im Stegkörper querverschieblich aufgenommen sein. Das Spiel in Querrichtung kann so bemessen sein, dass der Stegkörper relativ zum Einhängeglied in dessen Einführöffnung einschiebbar ist. Jede dieser beiden Ausgestaltungen erlaubt es, dass der Stegkörper die Einführöffnung verschließt.

Gemäß einer weiteren Ausgestaltung kann sich das Einhängeglied bei in der Einführöffnung aufgenommenem Stegkörper mit wenigstens einer seiner die Einführöffnung begrenzenden Stirnflächen am Stegkörper abstützen und somit größere Kräfte aufnehmen. Vorzugsweise verlaufen die die Einführöffnung begrenzenden Stirnflächen bei sich in der Durchstecköffnung befindlichen Einhängeglied parallel zur jeweiligen Seite des Stegkörpers. Somit kann sich das Einhängeglied vollflächig am Stegkörper abstützen, was zu einer geringeren Flächenpressung führt.

Das Einhängeglied weist mit seiner C-Form bevorzugt die Form eines Kettengliedes mit zwei abgerundeten Bugen und einem sich parallel zur Längsrichtung des Einhängeglieds erstreckenden Schenkel auf. Die Einführöffnung befindet sich bevorzugt quer zur Längsrichtung gegenüber diesem Schenkel. Sie kann insbesondere außermittig im Einhängeglied angeordnet sein. Dazu kann das Einhängeglied Schenkelstummel aufweisen, zwischen denen die Einführöffnung liegt und welche unterschiedlich lang sind. Bevorzugt ist die Einführöffnung dabei um wenigstens eine Stegbreite von der Mitte des Einhängeglieds verschoben. Die Einführöffnung kann um wenigstens den Betrag der Materialstärke des Stegkörpers in Längsrichtung des Einhängegliedes gegenüber der Mitte des Schenkels versetzt sein. Dies erleichtert das Einhängen eines Kettenstranges in das sich in der Durchstecköffnung befindliche Einhängeglied, wenn auf der anderen Seite des Stegkörpers bereits ein Kettenstrang in das Einhängeglied eingehängt ist.

Die Kettenstränge können in einer Variante mit einem beliebigen Kettenglied, bevorzugt aber nur mit einem ihrer Endglieder in das Einhängeglied eingehängt werden. Im folgenden soll mit dem Ausdruck "Kettenglied" ein beliebiges Kettenglied eines Kettenstranges, insbesondere aber auch nur das Endglied umfasst sein.

Das Einhängeglied kann eine zu den Kettengliedern der beiden in das Einhängeglied einzuhängenden oder eingehängten Kettensträngen unterschiedliche Ausgestaltung hinsichtlich seines Querschnittes und/oder seiner Außenkontur haben. Insbesondere kann das Einhängeglied größer als die Kettenglieder der Kettenstränge sein.

Beispielsweise kann das Einhängeglied einen senkrecht zu der vom Einhängeglied aufgespannten Ebene abgeflachten, insbesondere rechteckigen Querschnitt aufweisen. Durch den abgeflachten Querschnitt können trotz der Einführöffnung und trotz einer geringen Bauhöhe große Kräfte zwischen den Kettensträngen übertragen bzw. bei sich am Stegkörper abstützenden Einhängeglied über den Stegkörper geleitet werden, während gleichzeitig das Einhängeglied noch in die Öffnungen der Kettenglieder der zwei Kettenstränge einführbar ist.

Um eine Fehlbedienung zu vermeiden, kann das Einhängeglied wenigstens in einem an die Einführöffnung unmittelbar angrenzenden Bereich einen Querschnitt aufweisen, der in nur einer Orientierung in ein Kettenglied der zwei Kettenstränge einführbar ist. Damit lassen sich Verkantungen, die aufgrund einer falschen Orientierung eines Kettenglieds beim Einhängen in das Einhängeglied auftreten, zuverlässig vermeiden.

Der Querschnitt des Einhängeglieds kann insbesondere so ausgestaltet sein, dass er in nur einer Orientierung in den freibleibenden Bereich der zentralen Öffnung eines Kettengliedes wenigstens eines der zwei Kettenstränge einführbar ist. Dies lässt sich beispielsweise durch Verwendung eines nicht-quadratischen, aber rechteckigen Querschnittes erreichen, dessen kleinere Abmessung in etwa der lichten Weite der Öffnung des Endglieds eines der zwei Kettenstränge entspricht und dessen größere Abmessung der freibleibenden Länge der Öffnung dieses Endgliedes entspricht.

Gemäß einer weiteren vorteilhaften Ausgestaltung kann wenigstens ein Kettenglied der zwei Kettenstränge gegenüber dem Einhängeglied unverkippbar von diesem gehalten sein. Dies wird durch einen Querschnitt des Einhängegliedes erreicht, der mit der Öffnung des in das Einhängeglied einzuhängenden oder eingehängten Kettengliedes eine Formschlusspaarung bereitstellt, durch die eine Drehbewegung des Kettengliedes um den Schenkel und/oder Bug des Einhängegliedes gesperrt ist.

In den Stegkörper kann ein weiteres Kettenglied eingehängt sein. Dieses Kettenglied kann ein weiteres Einhängeglied, ein Ringglied, ein Endglied ein Kettenglied eines weiteren Kettenstranges, ein Koppelglied, das sich von den Kettengliedern des weiteren Kettenstranges unterscheidet und speziell zur Verbindung zwischen dem weiteren Kettenstrang und dem Stegkörper dient, oder ein einzelnes solches Kettenglied sein. Die vom Einhängeglied und vom weiteren Kettenglied aufgespannten Ebenen verlaufen bevorzugt parallel zueinander, so dass das Kettenglied des weiteren Kettenstranges ebenfalls in die Durchstecköffnung eingesetzt werden kann.

In einer Weiterbildung ist das weitere Kettenglied nicht in eine eigene Öffnung im Stegkörper eingehängt, sondern gemeinsam mit dem Einhängeglied in der Durchstecköffnung. Das weitere Kettenglied kann als Sicherung, insbesondere Lagesicherung des Einhängegliedes in der Durchstecköffnung dienen. Beispielsweise kann durch das weitere Kettenglied die Verschieblichkeit des Einhängegliedes in der Durchstecköffnung quer zu seiner Längsrichtung mittelbar oder unmittelbar verringert bzw. das Einhängeglied in der Durchstecköffnung unverschieblich gesichert sein. Ein weiteres Kettenglied, das diese Sicherungsfunktion erfüllt, ist im Folgenden als Sicherungsglied bezeichnet.

Insbesondere kann bei in der Durchstecköffnung angebrachtem Sicherungsglied das Einhängeglied in einer Position gesichert sein, in der die Einführöffnung zumindest teilweise, beispielsweise durch das Sicherungsglied und/oder den Stegkörper, verschlossen ist. Das in die Einführöffnung ragende Sicherungsglied und/oder der Stegkörper blockieren bei dieser Ausgestaltung die Längsverschiebung des Einhängegliedes. Die Sicherung kann dadurch erfolgen, dass das Sicherungsglied oder der Stegkörper mit der Einführöffnung des Einhängegliedes eine Formschlussverbindung bilden, die eine Bewegung des Einhängegliedes in Längsrichtung und quer dazu in der Ebene des Einhängegliedes sperrt. So kann beispielsweise das Sicherungsglied das Einhängeglied in einer Stellung fixieren, in der der Stegkörper in die Einführöffnung ragt. Das Sicherungsglied kann als Anschlag außen am Schenkel des Einhängegliedes liegen und eine Querverschiebung des Einhängegliedes blockieren.

Um ein unabsichtliches Lösen des Sicherungsgliedes zu vermeiden, kann dieses durch plastische Verformung in der Durchstecköffnung gesichert sein. Beispielsweise kann eine Öffnung des Sicherungsgliedes zugedrückt werden.

Eine Längsrichtung des Sicherungsgliedes kann quer zu den zwei Kettensträngen, insbesondere parallel zu wenigstens einer der beiden Flachseiten des Stegkörpers, verlaufen Der weitere Kettenstrang, der in das Sicherungsglied eingehängt sein kann, kann ein Leiterkettenstrang sein, der im montierten Zustand der Reifen- oder Gleitschutzvorrichtung von der Lauffläche des Kraftfahrzeugreifens über die Reifenflanke in radialer Richtung zu einem Seitenstrang führt und das Laufnetz mit dem Seitenstrang verbindet.

Die Einführöffnung kann sich gemäß einer weiteren Ausgestaltung der Erfindung in einer von einer Einhängeöffnung des Einhängegliedes zur Aufnahme der eingehängten Kettenglieder weg weisenden Richtung weiten. Dies kann das Einfädeln der Kettenglieder der zwei Kettenstränge in die Einführöffnung erleichtern. Die Einführöffnung kann ferner von wenigstens einer zumindest abschnittsweise konkav gekrümmten Stirnfläche des Einhängegliedes begrenzt sein, wobei sie insbesondere in der vom Einhängeglied aufgespannten Ebene eine zu einem Bug des Sicherungsgliedes komplementäre Kontur aufweisen kann. Bei dieser Ausgestaltung kann sich beispielsweise ein die Einführöffnung Einhängegliedes verschließendes Sicherungsglied in die Einführöffnung schmiegen. Gleichzeitig erlaubt diese Formgebung eine relative Schwenkbewegung zwischen dem Sicherungsglied und dem Einhängeglied.

Bei auf dem Kraftfahrzeugreifen montierter Reifen- oder Gleitschutzvorrichtung kann der Stegkörper auf der Lauffläche des Kraftfahrzeugreifens insbesondere hochkant aufliegen. Die zwei Kettenstränge können in Umfangsrichtung der Lauffläche weisen, während die Einführöffnung des Einhängegliedes von der Mitte der Lauffläche weg zu einer Reifenflanke des Kraftfahrzeugreifens weist. Diese Ausgestaltung ist zum einen dann vorteilhaft, wenn während des Betriebs der Reifen- oder Gleitschutzvorrichtung am Einhängeglied eine zu den Reifenflanken hin gerichtete Kraft auftritt. Dies ist beispielsweise dann der Fall, wenn wenigstens einer der zwei Kettenstränge vom Stegkörper weg in Richtung der Reifenflanke verläuft. Diese Ausgestaltung kann zudem vorteilhaft sein, wenn sich das Einhängeglied an einem zur Reifenflanke hin gelegenen Ende des Stegkörpers befindet und an dieser Stelle das Kettenglied eines Leiterkettenstranges eingehängt ist, das die Einführöffnung verschließt.

Es ist auch möglich, dass bei auf dem Kraftfahrzeugreifen montierter Reifen- oder Gleitschutzvorrichtung die Einführöffnung des Einhängegliedes zur Mitte der Lauffläche hinweist. Dies ist insbesondere dann von Vorteil, wenn wenigstens einer der zwei Kettenstränge sich vom Stegkörper weg in Richtung der Mitte der Lauffläche erstreckt, so dass im Betrieb eine Kraft erzeugt wird, welche die Einführöffnung zum Stegkörper hin bewegt. Lässt sich der Stegkörper in die Einführöffnung bewegen, so ergibt sich bei dieser Konstellation während des Betriebs automatisch eine Position, in der der Stegkörper die Einführöffnung sperrt. Bei entsprechender Dimensionierung von Stegkörper und Einführöffnung rutscht der Stegkörper bei dieser Ausgestaltung automatisch in die Einführöffnung.

Der Stegkörper kann ein Breithalter für zwei Paare von durch Einhängeglieder verbundenen Kettensträngen eines im montierten Zustand auf der Lauffläche liegenden Laufnetzes der Reifen- oder Gleitschutzvorrichtung sein. Dazu können am Stegkörper beispielsweise zwei ihn durchdringende Einhängeglieder angeordnet sein, die zwei Paare von Kettensträngen miteinander verbinden. Bei einem Laufnetz, bei dem die zwei Kettenstränge in Umfangsrichtung aufeinander zu verlaufen und/oder voneinander weg verlaufen, kann der Stegkörper auch an der Stelle gelegen sein, in der die paarweisen, in Umfangsrichtung nebeneinander verlaufenden Kettenstränge den kleinsten Abstand voneinander aufweisen. An einer solchen Stelle wirkt der Stegkörper als Zusammenhalter der Paare von Kettensträngen.

Im Folgenden ist die Erfindung anhand von Ausführungsbeispielen mit Bezug auf die Zeichnungen exemplarisch näher erläutert. Für Elemente in den Figuren, die hinsichtlich Funktion und/oder Aufbau gleich oder ähnlich sind, werden dabei im Folgenden die gleichen Bezugszeichen verwendet.

Es zeigen:
- Fig. 1: eine schematische Perspektivansicht eines Ausführungsbeispiels einer erfindungsgemäßen Reifen- oder Gleitschutzvorrichtung im montierten Zustand auf einem Kraftfahrzeugreifen;
- Fig. 2: eine schematische Draufsicht auf eine erste Variante eines Einhängegliedes für das Ausführungsbeispiel der Fig. 1;
- Fig. 3: eine schematische Draufsicht auf eine zweite Variante eines Einhängegliedes für das Ausführungsbeispiel der Fig. 1;
- Fig. 4: eine schematische Draufsicht auf eine dritte Variante eines Einhängegliedes für das Ausführungsbeispiel der Fig. 1;
- Fig. 5: eine schematische Draufsicht auf einen Teil einer erfindungsgemäßen Reifen- oder Gleitschutzvorrichtung nach einem ersten Montageschritt;
- Fig. 6: eine schematische Draufsicht auf einen Teil einer erfindungsgemäßen Reifen- oder Gleitschutzvorrichtung nach einem zweiten Montageschritt;
- Fig. 7: eine schematische Draufsicht auf einen Teil einer erfindungsgemäßen Reifen- oder Gleitschutzvorrichtung nach einem dritten Montageschritt;
- Fig. 8: eine schematische Draufsicht auf einen Teil einer erfindungsgemäßen Reifen- oder Gleitschutzvorrichtung;
- Fig. 9: eine schematische Perspektivansicht eines Teils einer erfindungsgemäßen Reifen- und Gleitschutzvorrichtung.

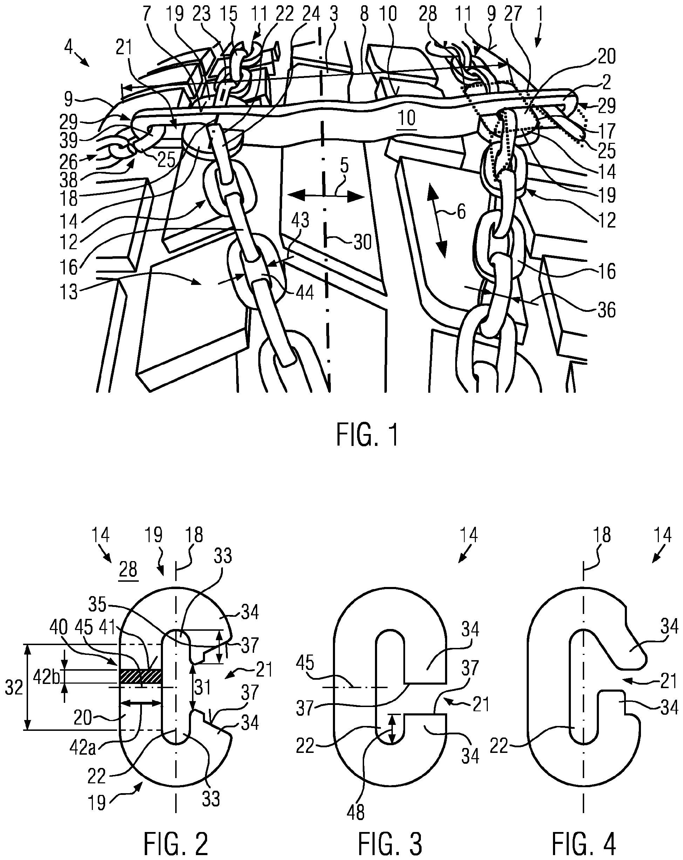

Zunächst ist der Aufbau einer erfindungsgemäßen Reifen- oder Gleitschutzvorrichtung 1 mit Bezug auf die Fig. 1 erläutert. Die Reifen- oder Gleitschutzvorrichtung 1 weist einen Stegkörper 2 auf, der hier lediglich beispielhaft auf einer Lauffläche 3 eines Kraftfahrzeugreifens 4 hochkant aufliegt. Ein solcher Stegkörper 2 kann auch an anderer Stelle des Kraftfahrzeugreifens 4 und in anderer Orientierung zum Einsatz kommen, beispielsweise als flach auf der Lauffläche 3 liegender Knotenpunkt.

Der Stegkörper 2 in der dargestellten Variante kann sich insbesondere in einer axialen Richtung 5, quer zur Umfangsrichtung 6 des Kraftfahrzeugreifens 4 bzw. seiner Lauffläche 3, erstrecken. Bevorzugt ist der Stegkörper 2 ein aus einem 3 mm bis 8 mm dicken Metallblech ausgestanztes Teil, das auf einer seiner Schmalseiten 7 auf der Lauffläche 3 aufliegt. In dieser Stellung und Orientierung erhöht der Stegkörper 2 die Traktion der Reifen- oder Gleitschutzvorrichtung 1. Die Höhe des Stegkörpers 2 kann zwischen 10 mm und 30 mm betragen.

Der Stegkörper 2 kann sich nahezu über die gesamte Breite 8 der Lauffläche 3, also von der einen Reifenschulter 9 zu der gegenüberliegenden Reifenschulter 9 des Kraftfahrzeugreifens 4 erstrecken.

Zwei gegenüberliegende Seiten 10, hier die Flachseiten 10 des Stegkörpers 2, weisen bei der in Fig. 1 dargestellten Stellung des Stegkörpers 2 in Umfangsrichtung 6. Von ihnen weg erstreckt sich wenigstens ein Paar von Kettensträngen 11, 12 bevorzugt ebenfalls in Umfangsrichtung 6, wobei die Kettenstränge 11, 12 dabei leicht aufeinander zu oder voneinander weg orientiert sein können. Wie Fig. 1 zeigt, können pro Stegkörper 2 auch zwei im wesentlichen parallele Paare von Kettensträngen 11, 12 oder eine größere Anzahl als zwei Paare von Kettensträngen 11, 12 vorgesehen sein.

Die Kettenstränge 11, 12 können Teil eines Laufnetzes 13 der Reifen- oder Gleitschutzvorrichtung 1 sein. Das Laufnetz 13 ist derjenige Teil der Reifen- oder Gleitschutzvorrichtung 1, der im montierten Zustand auf der Lauffläche 3 aufliegt und beim Abrollen des Kraftfahrzeugreifens 4 zwischen der Lauffläche 3 und dem Untergrund (nicht gezeigt) zu liegen kommt.

Im Folgenden beschränkt sich die Beschreibung des Ausführungsbeispiels der Fig. 1 auf lediglich ein Paar von Kettensträngen 11, 12. Diese Ausführungen können auch auf das zweite und jedes weitere Paar von Kettensträngen 11, 12 übertragen werden.

Die beiden Kettenstränge 11, 12 sind durch ein C-förmiges Einhängeglied 14 miteinander verbunden. Von seiner Formgebung her kann das Einhängeglied 14 einen einem Kettenglied ähnlichen Aufbau aufweisen. Hinsichtlich seiner Ausgestaltung und seiner Abmessungen unterscheidet es sich jedoch in der dargestellten Variante sowohl von den Kettengliedern 15 des Kettenstranges 11 als auch von den Kettengliedern 16 des Kettenstranges 12. Dabei ist nicht erforderlich, dass die Kettenstränge 11, 12 zueinander identisch sind bzw. jeder der Kettenstränge 11, 12 aus identischen Kettengliedern 15, 16, hier Profilstahlgliedern, aufgebaut ist, obwohl dies in Fig.1 so dargestellt ist.

Das Einhängeglied 14 ist in eine Durchstecköffnung 17 des Stegkörpers 2 eingesteckt, so dass es von den beiden Flachseiten 10 hervorragt. Die Durchstecköffnung 17 kann insbesondere ein Langloch und/oder in den Stegkörper 2 eingestanzt sein. Das Einhängeglied 14 ist in der Durchstecköffnung 17 bevorzugt mit Spiel gehalten. Das Spiel kann so bemessen sein, dass bei einem auf einer Seite 10 des Stegkörpers 2 in das Einhängeglied 14 eingehängten Kettenstrang 11 die Einführöffnung 21 zum Einhängen des anderen 12 der zwei Kettenstränge 11, 12 auf die andere Seite 10 des Stegkörpers 2 verschieblich ist.

Das Einhängeglied 14 ist länglich und weist an seinen beiden in Längsrichtung 18 gelegenen Enden jeweils einen vorzugsweise kreisförmig gebogenen Bug 19 auf. An einer Seite sind die beiden Buge durch einen in Längsrichtung 18 verlaufenden Schenkel 20 miteinander verbunden. Gegenüberliegend dem Schenkel weist das Einhängeglied 14 eine Einführöffnung 21 auf, die mit einer zentralen Einhängeöffnung 22 verbunden ist.

In der Durchstecköffnung 17 des Stegkörpers 2 ist das Einhängeglied 14 bevorzugt sowohl längsverschieblich als auch querverschieblich, also in Längsrichtung 18 und quer dazu beweglich, geführt.

Durch die Einführöffnung 21 des Einhängegliedes 2 können die Endglieder 23, 24 der Kettenstränge 11, 12 in die Einhängeöffnung 22 eingehängt werden.

In der Durchstecköffnung 17 oder in eine weitere, neben der Durchstecköffnung 17 angeordnete Öffnung (nicht dargestellt) kann das Endglied oder ein spezielles Koppelglied 25 eines weiteren Kettenstranges 26 eingehängt sein. Das Koppelglied kann dabei der Befestigung des weiteren Kettenstranges 26 am Stegkörper 2 dienen. Es unterscheidet sich bei der dargestellten Ausführungsform in seiner Ausgestaltung von den Kettengliedern des weiteren Kettenstranges 26. Der weitere Kettenstrang 26 kann im Wesentlichen quer zur Lauffläche 3 bzw. im Wesentlichen quer zu den Kettensträngen 11, 12 bzw. parallel zu den Schmal- und/oder Flachseiten 7, 10 des Stegkörpers 2 verlaufen.

Bei dem in Fig. 1 dargestellten Ausführungsbeispiel ist der weitere Kettenstrang 26 ein Leiterstrang, der den Stegkörper 2 bzw. über den Stegkörper 2 das Laufnetz 13 mit einem nicht dargestellten Seitenstrang der Reifen- oder Gleitschutzvorrichtung 1 verbindet. Das Endglied 25 kann in derselben Orientierung in den Stegkörper 2 eingehängt sein wie das Einhängeglied 14, so dass die Ebene 27 des End- oder Koppelgliedes 25 im Wesentlichen parallel zur Ebene 28 des Einhängegliedes 14 verläuft.

Dient der Stegkörper 2 als Breithalter für wenigstens zwei Paare von Kettensträngen 11, 12, so befinden sich die Durchstecköffnungen 17 bevorzugt möglichst nahe an den Reifenschultern 9, insbesondere jedoch nahe an den Enden 29 des Stegkörpers 2. Dient der Stegkörper 2 dazu, die wenigstens zwei Paare von Kettensträngen 11, 12 zusammenzuhalten, können die Durchstecköffnungen 17 auch nahe einer Mitte 30 der Lauffläche nahe beieinander angeordnet sein. In einem solchen Fall ist denkbar, dass nur eine einzige Durchgangsöffnung 17 für zwei oder mehr Paare von Kettensträngen 11, 12 vorgesehen ist.

Der Stegkörper 2 funktioniert als Breithalter für zwei voneinander beabstandete Paare von Kettensträngen 11, 12, wenn die Kettenstränge 11, 12 auf wenigstens einer Seite des Stegkörpers 2 aufeinander zu verlaufen. Verlaufen auf wenigstens einer Seite des Stegkörpers 2 die Kettenstränge 11, 12 voneinander weg, dient der Stegkörper 2 als Zusammenhalter für die Paare von Kettensträngen 11, 12. Eine Reifen- oder Gleitschutzvorrichtung 1 kann mit mehreren Stegkörpern 2 versehen sein, die jeweils als Breit- und/oder Zusammenhalter dienen. Nicht jeder Stegkörper 2 einer Reifen- oder Gleitschutzvorrichtung 1 muss mit einem Einhängeglied 14 versehen sein.

In den Fig. 2 bis 4 sind unterschiedliche Bauformen von Einhängegliedern 14 gezeigt. Die C-Form ist gut zu erkennen. In einer Reifen- oder Gleitschutzvorrichtung 1 kann jeweils nur eine Bauform eines Einhängegliedes 14 oder aber eine beliebige Kombination von Bauformen verwendet werden.

Das Einhängeglied der Fig. 2 weist eine Einführöffnung 21 auf, deren lichte Weite 31 in Längsrichtung 18 kleiner ist als die Länge 32 des Schenkels 20. Somit ist die Einhängeöffnung 22 an ihren beiden Enden 33 auf der Seite der Einführöffnung 21 jeweils noch von einem Schenkelstummel 34 begrenzt. Die Einführöffnung 21 kann mittig dem Schenkel 20 gegenüberliegen, so dass die beiden Schenkelstummel 34 gleich lang sind. Die Schenkelstummel 34 können auch unterschiedlich lang sein. Die Einführöffnung 21 kann außermittig im Einhängeglied 14 angeordnet sein. Die Länge 35 der Schenkelstummel 34 entspricht vorzugsweise wenigstens der Dicke 36 (Fig. 1) eines Endgliedes 23, 24, bei verschiedenen Endgliedern 23, 24 vorzugsweise der größten Dicke 36. Die Einführöffnung kann sich in der Ebene 28 in Richtung weg von der Einhängeöffnung 22 erweitern, so dass das Einhängen der Endglieder 23, 24 in die Einhängeöffnung 22 erleichtert ist.

Die Einführöffnung 21 ist von zwei sich gegenüberliegenden Stirnflächen 37 begrenzt. Die Stirnflächen 37 können wenigstens abschnittsweise konkav, insbesondere kreisförmig gekrümmt sein. Eine von den Stirnflächen 37 gebildete Kontur der Einführöffnung 21 kann insbesondere eine Kontur aufweisen, die komplementär zu einem Abschnitt der Außenkontur 38, insbesondere der Außenkontur 38 eines Buges 39 des End- oder Koppelgliedes 25 ist.

Der Querschnitt 40 des Einhängegliedes 14 ist bevorzugt rechteckig, wobei die Flachseiten 41 des Querschnittes 40 bevorzugt parallel zur Ebene 28 des Einhängegliedes 14 liegen.

Bei dem Einhängeglied 14 der Fig. 2 ist der Querschnitt 40 so bemessen, dass die Endglieder 23, 24 der Kettenstränge 11, 12 in den Bugen 19 verkippsicher gehalten sind.

Eine verkippsichere Halterung eines der Endglieder 23, 24 am Einhängeglied 14 kann beispielsweise dadurch erreicht werden, dass die größere Abmessung 42a des Querschnitts 40 größer ist als die Dicke 36 der Endglieder 23, 24 und insbesondere die Breite 43 (Fig. 1) der Öffnung 44 der Endglieder 23, 24 ist. Die kleinere Abmessung 42b des Querschnitts 40 entspricht der Materialstärke des Einhängegliedes 14. Sie kann insbesondere höchstens so groß sein wie die Dicke 36.

Falls nur Wert darauf gelegt wird, dass die Endglieder 23, 24 nicht in falscher Orientierung in das Einhängeglied 14 eingehängt werden können, was Verkantungen und Verdrehungen in den Kettensträngen 11, 12 vermeidet, ist es ausreichend, wenn der Querschnitt 40 wie oben beschrieben lediglich im Bereich der Stirnflächen 37 vorliegt. Im Bereich der Buge 19 kann dann ein Querschnitt vorhanden sein, der eine Verschwenkung der Endglieder 23, 24 um die Buge 19 als Achse erlaubt. Ein solcher Querschnitt weist beispielsweise eine Kreisform mit einem Durchmesser auf, der kleiner als die Dicke 36 des betreffenden Endgliedes 23, 24 ist.

Bei der Beschreibung des Einhängegliedes 14 der Fig. 3 wird der Kürze halber lediglich auf die Unterschiede zum Einhängeglied 14 der Fig. 2 eingegangen.

Während bei dem Einhängeglied 14 der Fig. 2 die Einführöffnung 21 mittig liegt, ist sie bei dem Einhängeglied 14 der Fig. 3 außermittig angeordnet. Der Versatz der Einführöffnung 21 gegenüber der Mitte 45 des Schenkels 20 des Einhängegliedes 14 kann insbesondere der Materialstärke des Stegkörpers 2 entsprechen. Eine Höhe des kürzeren Schenkelstummels sollte wenigstens der halben Dicke 36 der Endglieder 23, 24, vorzugsweise deren Dicke 36 entsprechen.

Ein weiterer Unterschied des Einhängegliedes 14 der Fig. 3 zu dem der Fig. 2 besteht darin, dass die Stirnflächen 37 parallel zueinander verlaufen.

Bei dem Einhängeglied 14 der Fig. 4 wird ebenfalls wieder nur auf die Unterschiede zu den beiden Einhängegliedern 14 der Fig. 2 und 3 eingegangen. Das Einhängeglied 14 der Fig. 4 weist Schenkelstummel 34 mit einer gegenüber dem übrigen Einhängeglied 14 verringerten Abmessung 42 des Querschnitts 40 auf. Dies erlaubt es, die Endglieder 23, 24 auch dann in die Schenkelstummel 34 einzuhängen, wenn sie nicht exakt senkrecht zu dem Einhängeglied 14 ausgerichtet sind. Die Endglieder 23, 24 können noch auf den Schenkelstummeln 34 senkrecht zum Einhängeglied 14 ausgerichtet und nur dann über die Buge 19 geschoben werden.

Einer der Schenkelstummel 34 kann, zumindest in einem Bereich mit verringertem Querschnitt schräg, vorzugsweise in einem spitzen Winkel zur Längsrichtung 18 des Einhängegliedes verlaufen. Dieser Schenkelstummel 34 kann zum Verschließen des Einhängegliedes 14 zur Einhängeöffnung 22 hin gebogen werden.

Die in den Fig. 2 bis 4 dargestellten, im Einzelnen unterschiedlichen Merkmale können beliebig miteinander kombiniert werden. So kann beispielsweise das Einhängeglied 14 der Fig. 3 eine mittig angeordnete Einführöffnung 21 und/oder eine sich erweiternde Einführöffnung 21 aufweisen. Einer der Schenkelstummel 34 des Einhängegliedes 14 der Fig. 4 kann wie ein Schenkelstummel 34 des Einhängegliedes 14 der Fig. 3 ausgestaltet sein.

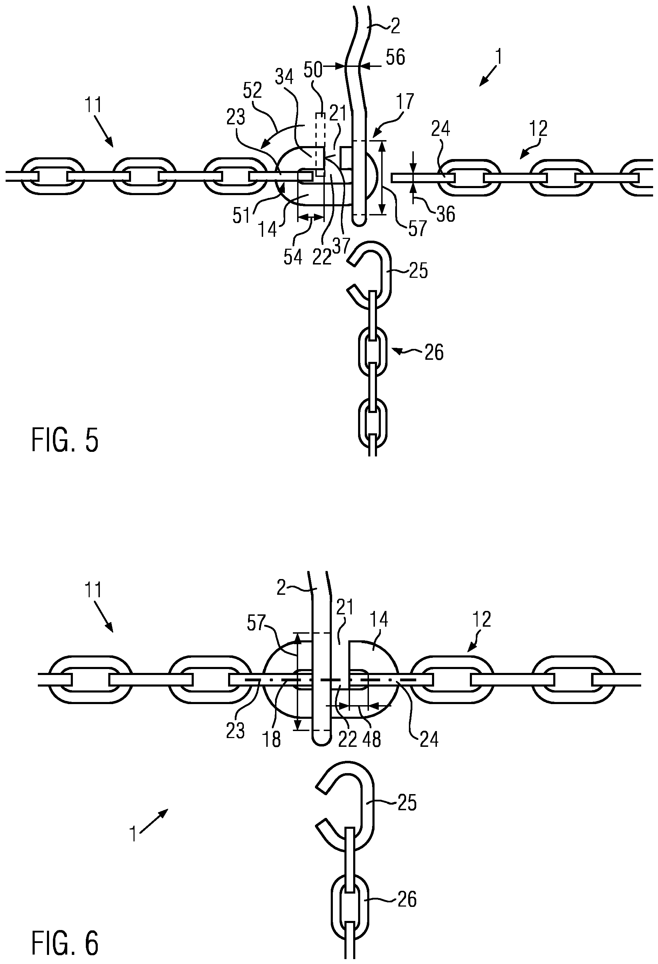

Mit Bezug auf die Fig. 5 bis 7 ist im Folgenden der Zusammenbau einer Reifen- oder Gleitschutzvorrichtung 1 im Bereich des Stegkörpers 2 unter Verwendung des Einhängegliedes 14 der Fig. 3 dargestellt.

Fig. 5 zeigt den Stegkörper 2, das Einhängeglied 14 sowie die beiden Kettenstränge 11, 12 und den weiteren Kettenstrang 26 mit einem End- oder Koppelglied 25 nach Fertigstellung eines ersten Montageschrittes. Das Endglied 23 des einen Kettenstranges 11 wurde bereits in die Einführöffnung 21 eingeführt und auf der Seite des längeren Schenkelstummels 34 in die Einhängeöffnung 22 eingehängt. Aufgrund der Querschnittsform des Einhängegliedes 14 kann das Endglied 23 nur in der in Fig. 5 gestrichelt dargestellten Einführstellung 50 in die Einhängeöffnung 22 eingehängt werden. In der Einführstellung ist die Längsachse des Endgliedes 23 senkrecht zur Längsachse des Einhängegliedes ausgerichtet. Außerdem sind das Endglied 23 und das Einhängeglied 14 mit ihren jeweiligen Ebenen senkrecht zueinander ausgerichtet. Um in die Endstellung 51 zu gelangen, in der die Längsrichtungen von Endglied 23 und Einhängeglied 14 im Wesentlichen miteinander fluchten, muss das Endglied 23 entlang des Schenkelstummels 34 verschoben und anschließend um 90° entlang des Buges 19 verschwenkt werden, wie durch den Pfeil 52 angedeutet ist.

Das Einhängen des Kettenstranges 11 kann an beliebiger Stelle erfolgen. Hierzu muss das Einhängeglied 14 sich nicht in der Durchstecköffnung 17 befinden.

Ist der Kettenstrang 11 in das Einhängeglied 14 eingehängt, wird dieses, sofern dies nicht bereits während des Einhängevorgangs erfolgt ist, in die Durchstecköffnung 17 eingeführt. Bei der in Fig. 5 dargestellten Variante ist dabei die Einführöffnung 21 vom näherliegenden Ende 29 des Stegkörpers 2 weggerichtet. Auf der Lauffläche 3 weist die Einführöffnung 21 zur Mitte 30 des Reifens 4.

Das Einhängeglied 14 wird jetzt so weit in die Durchstecköffnung 17 eingeschoben, bis die Einführöffnung 21 um wenigstens eine Dicke 36 des Endgliedes 24 des zweiten Kettenstranges 12 auf der vom Kettenstrang 11 abgewandten Seite des Stegkörpers hervorragt. Die Höhe der Durchstecköffnung 17 quer zur Ebene 28 des Einhängegliedes 14 ist bevorzugt kleiner als die Breite eines Endgliedes 23 bzw. 24 zwischen den Außenseiten ihrer Schenkel, so dass das im Einhängeglied 14 eingehängte Kettenglied 23 als Anschlag dient, der das Einschieben des Einhängegliedes 14 in die Durchstecköffnung 17 begrenzt.

Die Stirnfläche 37 am längeren Schenkelstummel 34 weist wenigstens einen Abstand 54 vom Ende der Einhängeöffnung 22 auf derselben Seite auf, der kleiner oder gleich der Summe aus der Dicke 36 des Endgliedes 23 und der Materialstärke 56 des Stegkörpers ist. Auf diese Weise liegt die Stirnfläche 37 des längeren Schenkelstummels 34 auf Höhe der Flachseite 10 auf der Seite des anderen Endgliedes 24, wenn das Endglied 23 gegen den Stegkörper 2 stößt. Somit ist die Einführöffnung 21 auf der dem Kettenstrang gegenüberliegenden Seite vollständig frei. Das Endglied 24 des zweiten Kettenstranges 12 kann somit in die Einhängeöffnung 22 auf dieselbe Weise eingehängt werden, wie das Endglied 23.

Bei eingehängtem Endglied 24 ist dann der in Fig. 6 dargestellte zweite Fertigungsschritt vollendet.

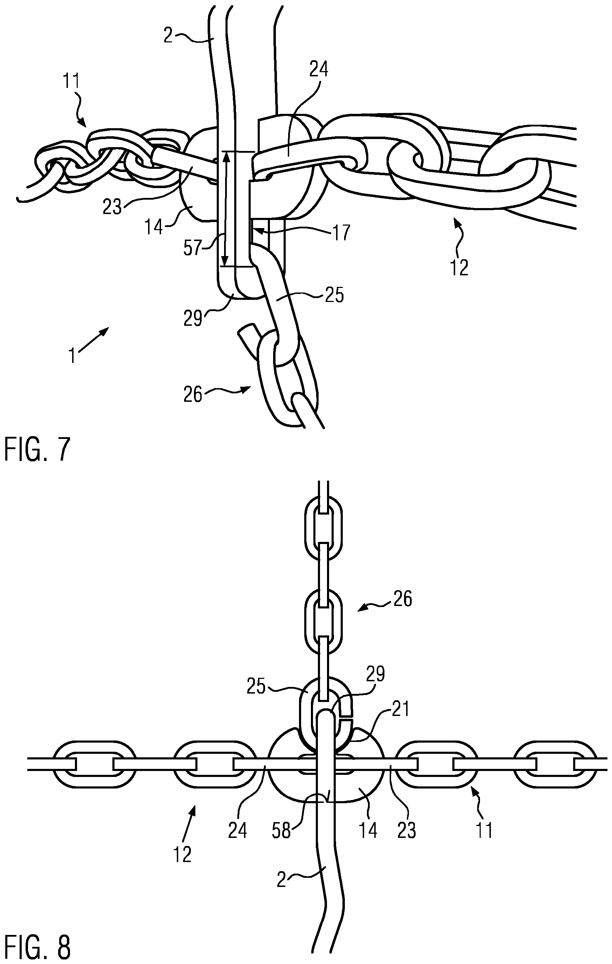

Ist, wie beim dargestellten Ausführungsbeispiel, ein weiterer Kettenstrang 26 oder auch nur dessen End- oder Koppelglied 25, alternativ auch ein Ringglied, ein weiteres Einhängeglied oder Kettenglied, am Stegkörper 2 und insbesondere in der Durchstecköffnung 17 zu befestigen, erfolgt ein weiterer Montageschritt, der im Folgenden mit Bezug auf die Fig. 7 erläutert ist.

Das Einhängeglied 14 wird aus der in Fig. 6 dargestellten Stellung etwas zurück in Richtung des Kettenstranges 11 verschoben, bis der Stegkörper 2 und die Einführöffnung 21 miteinander fluchten. Dann wird das Einhängeglied 17 quer zu seiner Längsrichtung 18 in der Durchstecköffnung 17 verschoben, bis der Stegkörper 2 in die Einführöffnung 21 ragt. Das Einhängeglied 14 kann je nach Ausgestaltung soweit verschoben werden, bis der Stegkörper zwischen die beiden Endglieder 23 in der Einhängeöffnung 22 gelangt.

Abhängig von der Länge 57 der Durchstecköffnung 17 quer zur Längsrichtung 18 des Einhängegliedes 14 kann das End- oder Koppelglied 25 des weiteren Kettenstranges 26 erst eingeführt werden, wenn der Stegkörper 2 in die Einführöffnung 21 ragt oder, bei kurzer Länge 57, vollständig zwischen die Endglieder 23, 24 gefahren ist. Der Stegkörper 2 wird hierzu mit einem Ende 29 in das End- oder Koppelglied 25 eingehängt, so dass es in der Durchstecköffnung 17 an einem Ende 58 der Durchstecköffnung 17 gegenüber dem Einhängeglied 14 zu liegen kommt, das am anderen Ende 58 der Durchstecköffnung liegt.

Ist das End- oder Koppelglied 25 in die Durchstecköffnung 17 eingehängt, ist die in Fig. 7 dargestellte Position erreicht. Bevorzugt sperrt das End- oder Koppelglied 25 die Bewegung des Einhängegliedes 14 quer zu seiner Längsrichtung 18 in der Durchstecköffnung 17, so dass der Stegkörper 2 nicht vollständig aus der Einführöffnung 21 gelangen kann. Das End- oder Koppelglied 25 stellt bei dieser Ausgestaltung ein Sicherungsglied 59 des Einhängegliedes 14 dar. Diese erhöhte Sicherheit ist allerdings mit dem Nachteil verbunden, dass bei einer Änderung der Länge eines Kettenstranges 11, 12 zunächst das End- oder Koppelglied 25 entfernt werden muss. Ist diese erhöhte Sicherheit nicht notwendig, kann die Länge 57 der Durchstecköffnung 17 ausreichend lang gewählt werden, so dass trotz eingehängtem End- oder Koppelglied 25 der Stegkörper 2 aus der Einführöffnung 21 gelangen kann.

Ist, wie in Fig. 7 gezeigt, das End- oder Koppelglied 25 eingehängt, muss dieses nur noch durch plastische Verformung geschlossen werden und die Verbindung der beiden Kettenstränge 11, 12 mit dem Stegkörper 2 sowie des weiteren Kettenstranges 26 ist fertiggestellt.

Bei Zug auf einen der Kettenstränge 11, 12 stützt sich das Einhängeglied 14 über die in Zugrichtung weisende Stirnfläche 37 am Stegkörper 2, insbesondere dessen Flachseite 10 ab. Bevorzugt ist der Stegkörper 2 mit nur wenig Spiel in Längsrichtung 18 des Einhängegliedes 14 aufgenommen. Dies lässt sich auf einfache Weise sicherstellen, wenn die Materialstärke 56 des Stegkörpers 3 in etwa der Dicke 36 entspricht.

Fig. 8 zeigt eine Variante einer Befestigung zwischen Stegkörper 2, den Kettensträngen 11, 12, dem Einhängeglied 14 und dem weiteren Kettenstrang 26, hier ebenfalls mit einem End- oder Koppelglied 25. Diese Variante kann zusammen mit der in den Fig. 5 bis 7 dargestellten Ausgestaltung in einer Reifen- oder Gleitschutzvorrichtung 1 verwendet werden. Als Einhängeglied 14 kommt hier die in Fig. 2 dargestellte Ausgestaltung zum Einsatz. Der Kürze halber wird wieder lediglich auf die Unterschiede zum vorangegangenen Ausführungsbeispiel eingegangen.

Die Einführöffnung 21 ist in Fig. 8 zum nähergelegenen Ende 29 des Stegkörpers 2 gerichtet, in dessen Fortsetzung sich der weitere Kettenstrang 26 befindet. Auf der Lauffläche 3 würde die Einführöffnung 21 von der Reifenmitte 30 weg weisen.

Die Vorgehensweise zum Herstellen der in Fig. 8 dargestellten Verbindung entspricht grundsätzlich der in den Fig. 5 bis 7 gezeigten Vorgehensweise. Allerdings wird das End- oder Koppelglied 25 des weiteren Kettenstranges 26 in der Einführöffnung 21 liegend von der Durchstecköffnung 17 aufgenommen. Das End- oder Koppelglied 25 dient auch bei dieser Ausgestaltung als Sperre, die das Einhängeglied 14 in dessen Längsrichtung 18 unverschieblich fixiert. Außerdem blockiert das End- oder Koppelglied 25 eine Verschiebung des Einhängegliedes 14 in der Durchstecköffnung 17 quer zur Längsrichtung 18, so dass End- oder Koppelglied 25 und Einführöffnung 21 nicht außer Eingriff gelangen können. Das Einhängeglied 14 und das End- oder Koppelglied 25 liegen an den sich gegenüberliegenden Enden 58 der Durchstecköffnung 17 und blockieren sich so gegenseitig bezüglich einer Verschiebung in Längsrichtung der Durchstecköffnung.

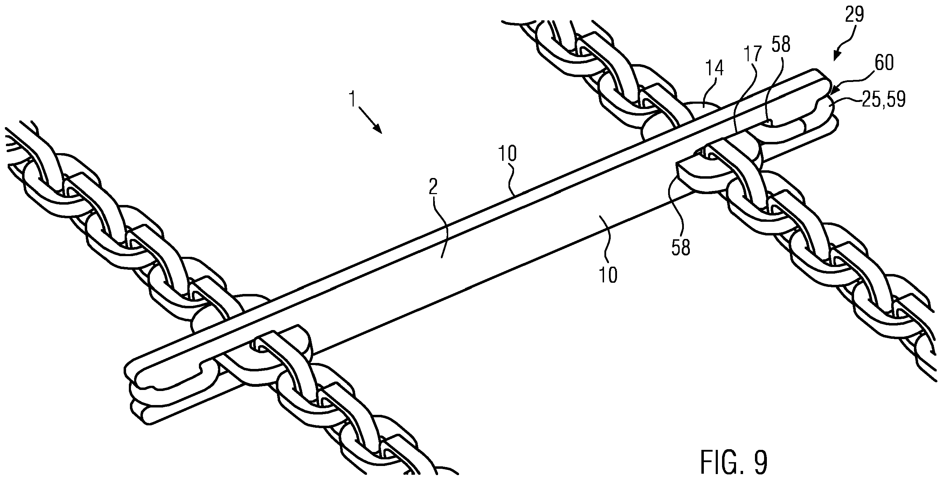

An dem End- oder Koppelglied 25 bzw. dem Sicherungsglied muss nicht notwendig ein weiterer Kettenstrang 26 befestigt sein. Das End- oder Koppelglied 25 kann auch alleine lediglich als Sicherungsglied 59 dienen, wie Fig. 9 zeigt. Das Ende 29 des Stegkörpers bis zur Durchstecköffnung 17 ist im Sicherungsglied 59 bzw. dessen Öffnung aufgenommen.

Am Ende 29 des Stegkörpers 2 kann sich eine Aufnahme 60 für das Sicherungsglied 59 befinden. Die Aufnahme 60 kann in Form einer sich von der einen zur anderen Flachseite 10 des Stegkörpers erstreckenden Kerbe oder Nut oder anderen Aussparung gebildet sein, deren Innenkontur der Außenkontur des Sicherungsgliedes entspricht. Die Aufnahme 60 kann sich auf Höhe der Durchstecköffnung 17 befinden, so dass das Sicherungsglied 59 parallel zur Durchstecköffnung 17 fixiert ist. Die Ebene des Sicherungsglieds 59 verläuft insbesondere parallel zur Ebene des Einhängegliedes 14.

Bei dieser Ausgestaltung ist das Einhängeglied 14 in der Durchstecköffnung 17 selbst dann durch das Sicherungsglied 59 gesichert, wenn kein weiterer Kettenstrang 26 vorhanden ist.

### Bezugszeichen

- 1: Reifen- oder Gleitschutzvorrichtung
- 2: Stegkörper
- 3: Lauffläche
- 4: Kraftfahrzeugreifen
- 5: axiale Richtung
- 6: Umfangsrichtung
- 7: Schmalseite des Stegkörpers
- 8: Breite der Lauffläche
- 9: Reifenschulter
- 10: Flachseite des Stegkörpers
- 11: Kettenstrang an einer Seite des Stegkörpers
- 12: Kettenstrang an der anderen Seite des Stegkörpers
- 13: Laufnetz
- 14: Einhängeglied
- 15: Kettenglieder des einen Kettenstranges 11
- 16: Kettenglieder des anderen Kettenstranges 12
- 17: Durchstecköffnung
- 18: Längsrichtung des Einhängegliedes
- 19: Bug des Einhängegliedes
- 20: Schenkel des Einhängegliedes
- 21: Einführöffnung des Einhängegliedes
- 22: Einhängeöffnung des Einhängegliedes
- 23: Endglied des einen Kettenstranges 11
- 24: Endglied des anderen Kettenstranges 12
- 25: End- oder Koppelglied des weiteren Kettenstranges
- 26: weiterer Kettenstrang
- 27: Ebene des Endgliedes 25
- 28: Ebene des Einhängegliedes
- 29: Ende des Stegkörpers
- 30: Mitte der Lauffläche
- 31: Lichte Weite der Einführöffnung
- 32: Länge des Schenkels des Einhängegliedes
- 33: Ende der Einhängeöffnung
- 34: Schenkelstummel des Einhängegliedes
- 35: Länge des Schenkelstummels
- 36: Dicke der Endglieder 23, 24
- 37: Stirnfläche an der Einführöffnung
- 38: Außenkontur des Endgliedes 25
- 39: Bug des End- oder Koppelgliedes des weiteren Kettenstranges
- 40: Querschnitt des Einhängegliedes
- 41: Flachseite des Querschnittes des Einhängegliedes
- 42a: Größere Abmessung des Querschnitts des Einhängegliedes
- 42a: Kleinere Abmessung des Querschnitts des Einhängegliedes
- 43: Breite der Öffnung der Endglieder 23, 24
- 44: Öffnung der Endglieder 23, 24
- 45: Mitte des Schenkels des Einhängegliedes
- 48: Länge des kürzeren Schenkelstummels
- 50: Einführstellung eines Kettengliedes in das Einhängeglied
- 51: Endstellung eines Kettengliedes im Einhängeglied
- 52: Schwenkbewegung von der Einführ- in die Endstellung
- 53: Breite eines Endgliedes im Einhängeglied
- 54: Abstand einer Stirnfläche 37 vom nächstgelegenen Ende 33 der Einhängeöffnung
- 56: Materialstärke des Stegkörpers
- 57: Länge der Durchstecköffnung
- 58: Ende der Durchstecköffnung
- 59: Sicherungsglied
- 60: Aufnahme

## Patentansprüche

1. Reifen- oder Gleitschutzvorrichtung (1) für Kraftfahrzeugreifen (4) vorbestimmter Größe, mit wenigstens einem Stegkörper (2), der zwei gegenüberliegende Seiten (10) aufweist, von denen sich zwei Kettenstränge (11, 12) weg erstrecken, die durch ein Einhängeglied (14) miteinander verbunden sind, wobei das Einhängeglied (14) so angeordnet ist, dass es den Stegkörper (2) in einer Durchstecköffnung (17) durchragt, **dadurch gekennzeichnet, dass** das Einhängeglied (14) C-förmig mit einer Einführöffnung (21) zum Einhängen jeweils eines Kettengliedes (23, 24) der zwei Kettenstränge (11, 12) ausgestaltet ist.

2. Reifen- oder Gleitschutzvorrichtung (1) nach Anspruch 1, **dadurch gekennzeichnet, dass** das Einhängeglied (14) im Stegkörper (2) mit einem Spiel aufgenommen ist, das so bemessen ist, dass bei einem auf einer Seite (10) des Stegkörpers (2) in das Einhängeglied (14) eingehängten Kettenstrang (11) die Einführöffnung (21) zum Einhängen des anderen (12) der zwei Kettenstränge (11, 12) auf die andere Seite (10) des Stegkörpers (2) verschieblich ist.

3. Reifen- oder Gleitschutzvorrichtung (1) nach Anspruch 1 oder 2, **dadurch gekennzeichnet, dass** die lichte Weite (31) der Einführöffnung (21) größer ist als die Materialstärke (56) des Stegkörpers (2) zumindest in einem sich an die Durchstecköffnung (17) unmittelbar anschließenden Bereich des Stegkörpers (2).

4. Reifen- oder Gleitschutzvorrichtung (1) nach einem der Ansprüche 1 bis 3, **dadurch gekennzeichnet, dass** in den Stegkörper (2) ein Sicherungsglied (59) eingehängt ist, durch den die Verschieblichkeit des Einhängegliedes (14) in der Durchstecköffnung (17) quer zu seiner Längsrichtung (18) verringert ist.

5. Reifen- oder Gleitschutzvorrichtung (1) nach Anspruch 4, **dadurch gekennzeichnet, dass** bei in der Durchstecköffnung (17) angebrachtem Sicherungsglied (59) das Einhängeglied (14) in einer Position gesichert ist, in der die Einführöffnung (21) zumindest teilweise verschlossen ist.

6. Reifen- oder Gleitschutzvorrichtung (1) nach einem der Ansprüche 1 bis 5, **dadurch gekennzeichnet, dass** das Einhängeglied (14) eine Einhängeöffnung (22) zur Aufnahme der eingehängten Kettenglieder (23, 24) aufweist und dass sich die Einführöffnung (21) wenigstens in einer von der Einhängeöffnung (22) weg weisenden Richtung weitet.

7. Reifen- oder Gleitschutzvorrichtung (1) nach einem der Ansprüche 1 bis 6, **dadurch gekennzeichnet, dass** die Einführöffnung (21) außermittig im Einhängeglied (14) angeordnet ist.

8. Reifen- oder Gleitschutzvorrichtung (1) nach einem der Ansprüche 1 bis 7, **dadurch gekennzeichnet, dass** die Einführöffnung (21) in der Ebene (28) des Einhängegliedes (14) eine zu einem Bug eines Ketten- oder Koppelgliedes (25) Sicherungsglieds (59) komplementäre Kontur aufweist.

9. Reifen- oder Gleitschutzvorrichtung (1) nach Anspruch 8, **dadurch gekennzeichnet, dass** das Einhängeglied (14) einen senkrecht zu der vom Einhängeglied (14) aufgespannten Ebene (28) abgeflachten Querschnitt (40) aufweist.

10. Reifen- oder Gleitschutzvorrichtung (1) nach einem der Ansprüche 1 bis 9, **dadurch gekennzeichnet, dass** unmittelbar angrenzend an die Einführöffnung (21) das Einhängeglied (14) einen Querschnitt (40) aufweist, der in nur einer Orientierung in ein Kettenglied (15, 16, 23, 24) der zwei Kettenstränge (11, 12) einführbar ist.

11. Reifen- oder Gleitschutzvorrichtung (1) nach einem der Ansprüche 1 bis 10, **dadurch gekennzeichnet, dass** wenigstens ein Kettenglied (15, 16, 23, 24) der zwei Kettenstränge (11, 12) gegenüber dem Einhängeglied (14) unverkippbar vom Einhängeglied (14) gehalten ist.

12. Reifen- oder Gleitschutzvorrichtung (1) nach einem der Ansprüche 1 bis 11, **dadurch gekennzeichnet, dass** der Stegkörper (2) und/oder das Einhängeglied (14) ein gestanztes Teil ist.

13. Reifen- oder Gleitschutzvorrichtung (1) nach einem der Ansprüche 1 bis 12, **dadurch gekennzeichnet, dass** die Einführöffnung (21) um wenigstens den Betrag der Materialstärke (56) des Stegkörpers (2) in Längsrichtung (18) des Einhängegliedes (14) gegenüber der Mitte (43) eines Schenkels (20) versetzt ist.

14. Reifen- oder Gleitschutzvorrichtung (1) nach einem der Ansprüche 1 bis 13, **dadurch gekennzeichnet, dass** das Einhängeglied (14) zu beiden Seiten der Einführöffnung (21) Schenkelstummel (34) aufweist, die unterschiedlich lang sind.

15. Reifen- oder Gleitschutzvorrichtung (1) nach einem der Ansprüche 1 bis 14, **dadurch gekennzeichnet, dass** am Stegkörper (2) zwei ihn durchragende Einhängeglieder (14) angeordnet sind, die zwei Paare von Kettensträngen (11, 12) miteinander verbinden.

## Claims

1. Tyre-protection or anti-skid device (1) for motor vehicle tyres (4) of a predetermined size, comprising at least one bar element (2) having two opposite sides (10) from which two chain strands (11, 12) extend, which strands are interconnected by a suspension member (14), the suspension member (14) being arranged such that it passes through an insertion opening (17) in the bar element (2), **characterised in that** the suspension member (14) is C-shaped and has an inlet opening (21) for suspending each chain member (23, 24) of the two chain strands (11, 12).

2. Tyre-protection or anti-skid device (1) according to claim 1, **characterised in that** the suspension member (14) is held in the bar element (2) so as to have a play that is dimensioned such that when one chain strand (11) is suspended in the suspension member (14) on one side (10) of the bar element (2), the inlet opening (21) can be moved to the other side (10) of the bar element (2) in order to suspend the other (12) of the two chain strands (11, 12).

3. Tyre-protection or anti-skid device (1) according to either claim 1 or claim 2, **characterised in that** the inside width (31) of the inlet opening (21) is greater than the material thickness (56) of the bar element (2), at least in a region of the bar element (2) adjoining the insertion opening (17).

4. Tyre-protection or anti-skid device (1) according to any of claims 1 to 3, **characterised in that** a securing member (59) is suspended in the bar element (2), by means of which member the ability of the suspension member (14) to move in the insertion opening (17), transversely to the longitudinal direction (18) of said suspension member, is reduced.

5. Tyre-protection or anti-skid device (1) according to claim 4, **characterised in that**, when the securing member (59) is inserted into the insertion opening (17), the suspension member (14) is secured in a position in which the inlet opening (21) is closed, at least in part.

6. Tyre-protection or anti-skid device (1) according to any of claims 1 to 5, **characterised in that** the suspension member (14) comprises a suspension opening (22) for receiving the suspended chain members (23, 24), and **in that** the inlet opening (21) widens at least in a direction away from the inlet opening (22).

7. Tyre-protection or anti-skid device (1) according to any of claims 1 to 6, **characterised in that** the inlet opening (21) is arranged eccentrically in the suspension member (14).

8. Tyre-protection or anti-skid device (1) according to any of claims 1 to 7, **characterised in that** the inlet opening (21) has a contour complementing a bow of a chain or coupling member (25) securing member (59) in the plane (28) of the suspension member (14).

9. Tyre-protection or anti-skid device (1) according to claim 8, **characterised in that** the suspension member (14) has a cross section (40) that is flattened perpendicularly to the plane (28) spanned by the suspension member (14).

10. Tyre-protection or anti-skid device (1) according to any of claims 1 to 9, **characterised in that**, immediately adjacent to the inlet opening (21), the suspension member (14) has a cross section (40) which can be inserted into a chain member (15, 16, 23, 24) of the two chain strands (11, 12) in only one orientation.

11. Tyre-protection or anti-skid device (1) according to any of claims 1 to 10, **characterised in that** at least one chain member (15, 16, 23, 24) of the two chain strands (11, 12) is held by the suspension member (14) in such a way that it is unable to tilt relative to the suspension member (14).

12. Tyre-protection or anti-skid device (1) according to any of claims 1 to 11, **characterised in that** the bar element (2) and/or the suspension member (14) is a stamped part.

13. Tyre-protection or anti-skid device (1) according to any of claims 1 to 12, **characterised in that** the inlet opening (21) is offset with respect to the centre (43) of a leg (20) by at least the magnitude of the material thickness (56) of the bar element (2) in the longitudinal direction (18) of the suspension member (14).

14. Tyre-protection or anti-skid device (1) according to any of claims 1 to 13, **characterised in that** the suspension member (14) comprises leg stumps (34) of different lengths on both sides of the inlet opening (21).

15. Tyre-protection or anti-skid device (1) according to any of claims 1 to 14, **characterised in that** two suspension members (14) passing through the bar element (2) are arranged thereon, which members interconnect two pairs of chain strands (11, 12).

## Revendications

1. Dispositif antidérapant ou de protection de pneumatique (1) pour pneumatiques (4) de véhicules automobiles, d'une grandeur prédéterminée, comprenant au moins un corps de traverse (2), qui présente deux côtés opposés (10) à partir desquels s'étendent en s'en éloignant, deux brins de chaîne (11, 12) reliées mutuellement par un organe d'accrochage (14), l'organe d'accrochage (14) étant agencé de manière à traverser le corps de traverse (2) dans une ouverture de passage (17), **caractérisé en ce que** l'organe d'accrochage (14) est d'une configuration en forme de C et comporte une ouverture d'insertion (21) destinée à l'accrochage respectif d'un maillon de chaîne (23, 24) des deux brins de chaîne (11, 12).

2. Dispositif antidérapant ou de protection de pneumatique (1) selon la revendication 1, **caractérisé en ce que** l'organe d'accrochage (14) est reçu dans le corps de traverse (2) avec un jeu qui est dimensionné de façon telle, que lorsqu'un brin de chaîne (11) est accroché d'un côté (10) du corps de traverse (2) dans l'organe d'accrochage (14), l'ouverture d'insertion (21), peut, pour permettre l'accrochage de l'autre (12) des deux brins de chaîne (11, 12), coulisser vers ledit autre côté (10) du corps de traverse (2).

3. Dispositif antidérapant ou de protection de pneumatique (1) selon la revendication 1 ou la revendication 2, **caractérisé en ce que** la largeur de passage libre (31) de l'ouverture d'insertion (21) est plus grande que l'épaisseur de matériau (56) du corps de traverse (2), au moins dans une zone du corps de traverse (2), qui se raccorde directement à l'ouverture de passage (17).

4. Dispositif antidérapant ou de protection de pneumatique (1) selon l'une des revendications 1 à 3, **caractérisé en ce que** dans le corps de traverse (2) est accroché un organe de sécurité (59), par l'intermédiaire duquel la possibilité de coulissement de l'organe d'accrochage (14) est réduite dans l'ouverture de passage (17), transversalement à sa direction longitudinale (18).

5. Dispositif antidérapant ou de protection de pneumatique (1) selon la revendication 4, **caractérisé en ce que** lorsque l'organe de sécurité (59) est placé dans l'ouverture de passage (17), l'organe d'accrochage (14) est sécurisé dans une position dans laquelle l'ouverture d'insertion (21) est au moins partiellement fermée.

6. Dispositif antidérapant ou de protection de pneumatique (1) selon l'une des revendications 1 à 5, **caractérisé en ce que** l'organe d'accrochage (14) présente une ouverture d'accrochage (22) destinée à recevoir les maillons de chaîne (23, 24) accrochés, et **en ce que** l'ouverture d'insertion (21) s'élargit au moins dans une direction s'éloignant de l'ouverture d'accrochage (22).

7. Dispositif antidérapant ou de protection de pneumatique (1) selon l'une des revendications 1 à 6, **caractérisé en ce que** l'ouverture d'insertion (21) est agencée de manière non centrale dans l'organe d'accrochage (14).

8. Dispositif antidérapant ou de protection de pneumatique (1) selon l'une des revendications 1 à 7, **caractérisé en ce que** l'ouverture d'insertion (21) présente, dans le plan (28) de l'organe d'accrochage (14), un contour complémentaire à un nez d'un organe de sécurité (59) d'un maillon de chaîne ou de couplage (25).

9. Dispositif antidérapant ou de protection de pneumatique (1) selon la revendication 8, **caractérisé en ce que** l'organe d'accrochage (14) présente une section transversale (40) aplatie perpendiculairement au plan (28) défini par l'organe d'accrochage (14).

10. Dispositif antidérapant ou de protection de pneumatique (1) selon l'une des revendications 1 à 9, **caractérisé en ce que** de manière directement adjacente à l'ouverture d'insertion (21), l'organe d'accrochage (14) présente une section transversale (40), qui ne peut être introduite dans un maillon de chaîne (15, 16, 23, 24) des deux brins de chaîne (11, 12) que dans une seule orientation.

11. Dispositif antidérapant ou de protection de pneumatique (1) selon l'une des revendications 1 à 10, **caractérisé en ce qu'**au moins un maillon de chaîne (15, 16, 23, 24) des deux brins de chaîne (11, 12) est maintenu par l'organe d'accrochage (14) de manière à ne pas pouvoir basculer par rapport à l'organe d'accrochage (14).

12. Dispositif antidérapant ou de protection de pneumatique (1) selon l'une des revendications 1 à 11, **caractérisé en ce que** le corps de traverse (2) et/ou l'organe d'accrochage (14) est une pièce découpée par matriçage.

13. Dispositif antidérapant ou de protection de pneumatique (1) selon l'une des revendications 1 à 12, **caractérisé en ce que** l'ouverture d'insertion (21) est décalée, d'au moins la valeur de l'épaisseur de matériau (56) du corps de traverse (2), dans la direction longitudinale (18) de l'organe d'accrochage (14) par rapport au milieu (43) d'une branche d'âme (20).

14. Dispositif antidérapant ou de protection de pneumatique (1) selon l'une des revendications 1 à 13, **caractérisé en ce que** l'organe d'accrochage (14) présente des deux côtés de l'ouverture d'insertion (21), des embouts d'aile (34), qui sont d'une longueur différente.

15. Dispositif antidérapant ou de protection de pneumatique (1) selon l'une des revendications 1 à 14, **caractérisé en ce que** sur le corps de traverse (2) sont agencés deux organes d'accrochage (14), qui le traversent, et relient mutuellement deux paires de brins de chaîne (11, 12).
